# FASCICULE DE BREVET EUROPEEN

(11) **EP 1 886 304 B1**
(45) Date de publication et mention de la délivrance du brevet: **31.12.2008**
(21) Numéro de dépôt: 06764689.3
(22) Date de dépôt: 24.05.2006
(51) Int. Cl.: G10L 15/18, G10L 15/08, G06F 17/27

(54) **PROCEDE, DISPOSITIF ET PROGRAMME D'ORDINATEUR POUR LA RECONNAISSANCE DE LA PAROLE**
VERFAHREN, EINRICHTUNG UND COMPUTERPROGRAMM ZUR SPRACHERKENNUNG
METHOD, DEVICE AND COMPUTER PROGRAMME FOR SPEECH RECOGNITION

(30) Priorité: 30.05.2005 FR 0505451
(43) Date de publication de la demande: 13.02.2008
(73) Titulaire: France Télécom, 75015 Paris (FR)
(72) Inventeur: FERRIEUX, Alexandre, F-22560 Pleumeur Bodou (FR)
(74) Mandataire: Cabinet Plasseraud
(86) Numéro de dépôt international: PCT/FR2006/001197
(87) Numéro de publication internationale: WO 2006/128997

(56) Documents cités:
- EP-A- 1 111 587
- WO-A-20/04114121
- US-A1- 2003 074 353
- US-B1- 6 567 778

## Description

L'invention se rapporte au domaine de la reconnaissance de parole.

Lorsqu'un utilisateur prononce une phrase, il génère un signal acoustique. Ce signal acoustique peut être transformé en signal électrique pour être traité. Néanmoins, dans la suite de la description, on utilisera le terme « signal acoustique » ou « phrase prononcée » pour désigner tout signal représentatif du signal acoustique.

Les mots prononcés sont retrouvés à partir du signal acoustique et d'un lexique. Dans la présente description, le terme « mot » désigne à la fois des mots au sens habituel du terme et des locutions, c'est à dire des suites de mots formant des unités de sens.

Le lexique comprend des mots, et pour chaque mot du lexique, un modèle acoustique associé. Des algorithmes bien connus de l'homme du métier permettent d'identifier des modèles acoustiques à partir d'une phrase prononcée. A chaque modèle acoustique identifié correspond une portion de la phrase prononcée.

En pratique, pour une portion de signal acoustique donnée, plusieurs modèles acoustiques sont couramment identifiés. A chaque modèle acoustique identifié est associé une valeur d'un score acoustique. Par exemple, deux modèles acoustiques, associés aux mots « poire » et « noir », peuvent être identifiés pour une portion de signal acoustique donnée. Le procédé ci-dessus, qui consiste à choisir le modèle acoustique associé au score acoustique le plus élevé, ne permet pas de rectifier une erreur d'estimation du score acoustique.

Pour estimer le mot correspondant à une portion de signal acoustique donnée de façon plus fiable, il est connu d'utiliser les portions de signal acoustique précédemment émises par l'utilisateur. Ainsi, si une portion de signal acoustique précédemment émise a de fortes chances de correspondre au mot « chat », le mot « noir » peut être estimé comme correct, malgré un score acoustique plus faible que le mot « poire ». Un tel procédé peut par exemple être mis en oeuvre via un modèle de Markov : la probabilité de passer du mot « chat » au mot « noir » est plus élevée que la probabilité de passer du mot « chat » au mot « poire ». Des représentations séquentielles des mots identifiés, par exemple une arborescence ou un diagramme, sont couramment utilisées.

Les algorithmes utilisés, par exemple l'algorithme de Viterbi, impliquent des modèles de langage ordonnés, c'est-à-dire sensibles à l'ordre des mots. La fiabilité de la reconnaissance dépend donc de l'ordre des mots prononcés par l'utilisateur.

Un modèle de langage ordonné peut par exemple évaluer la probabilité de passer du mot « chat » au mot « noir » comme non nulle du fait d'un apprentissage, et évaluer la probabilité de passer inversement du mot « noir » au mot « chat » comme nulle par défaut. Ainsi, si l'utilisateur prononce la phrase « noir est le chat », l'estimation du modèle acoustique de chaque portion de signal acoustique émise risque davantage d'être effectuée de façon erronée que si l'utilisateur avait prononcé la phrase « le chat est noir ».

Le document US6567778, par exemple, décrit un procédé de reonncaissance de parole oú, pour une phrase prononcée, un score composite est obtenu comme une combinaison des scores de chaque mot, et on détermine au moins un sous - ensemble préférentiel, de score composite le plus élevé.

Bien entendu, il est toujours possible d'injecter de la commutativité dans un modèle de langage ordonné, mais la mise en oeuvre d'un tel procédé risque d'être délicate du fait de sa complexité.

La présente invention vient améliorer la situation notamment en ce qu'elle permet d'obtenir une fiabilité de reconnaissance de la parole moins sensible à l'ordre des mots prononcés.

La présente invention a pour objet un procédé de reconnaissance de parole, comprenant, pour une phrase prononcée, les étapes :
(a) prévoir un lexique de mots comprenant des sous-ensembles de mots prédéterminés,
(b) attribuer, à chaque mot d'au moins un sous-ensemble, un score individuel en fonction de la valeur d'un critère de vraisemblance acoustique de ce mot avec une portion de la phrase prononcée,
(c) pour une pluralité de sous-ensembles, affecter à chaque sous-ensemble de la pluralité de sous-ensembles un score composite correspondant à une somme des scores individuels des mots de ce sous-ensemble,
(d) déterminer au moins un sous-ensemble préférentiel, de score composite le plus élevé.

Ainsi, à l'étape d), on sélectionne au moins un sous-ensemble de plus grand score composite en tant que sous-ensemble comportant des mots meilleurs candidats, indépendamment de l'ordre desdits mots meilleurs candidats dans la phrase prononcée.

Le procédé selon la présente invention implique un modèle de langage commutatif, c'est-à-dire défini par la cooccurrence des mots et non par leur séquence ordonnée. L'addition étant commutative, le score composite d'un sous-ensemble, en tant que somme cumulée de scores individuels, dépend seulement des mots de ce sous-ensemble et non d'un quelconque ordonnancement.

L'invention trouve une application particulièrement avantageuse dans le domaine de la reconnaissance de parole spontanée, dans lequel l'utilisateur bénéficie d'une totale liberté de parole, mais n'est bien entendu pas limitée à ce domaine.

II est rappelé que dans la description, le terme « mot » désigne à la fois un mot isolé et une locution.

Lors de l'étape (b), un score individuel est avantageusement attribué à chaque mot du lexique. On balaye ainsi tous les mots du lexique.

Lors de l'étape (c), la pluralité de sous-ensembles désigne avantageusement tous les sous-ensembles du lexique, le score composite d'un sous-ensemble pouvant bien entendu être nul.

Pour chaque mot, le score individuel attribué à ce mot est fonction de la valeur d'un critère de vraisemblance acoustique, par exemple un score acoustique, de ce mot avec une portion de la phrase prononcée. Ainsi, le score individuel peut être égal au score acoustique correspondant.

Alternativement, le score individuel peut ne prendre que des valeurs binaires. Lorsque le score acoustique d'un mot du lexique dépasse un certain seuil, le score individuel attribué à ce mot est égal à 1. Dans le cas contraire, le score individuel est nul. Un tel procédé permet une exécution relativement rapide de l'étape (c).

Le score composite d'un sous-ensemble peut être une simple somme des scores individuels des mots de ce sous-ensemble. Alternativement, la somme des scores individuels peut être pondérée, par exemple par la durée des mots correspondants dans la phrase prononcée.

Les sous-ensembles de mots du lexique sont avantageusement construits préalablement à l'exécution des étapes (b), (c) et (d). Ainsi, tous les sous-ensembles construits au préalable sont gardés en mémoire, ce qui permet une exécution relativement rapide des étapes (b), (c) et (d). De plus, un tel procédé peut ainsi permettre de choisir les mots de chaque sous ensemble construit au préalable.

Le procédé selon l'invention peut comprendre à l'étape (d) la sélection d'une liste réduite comprenant une pluralité de sous-ensembles préférentiels. Une étape (e) de détermination du sous-ensemble meilleur candidat peut être appliquée. Les étapes (a), (b), (c) et (d), de part leur rapidité d'exécution, sont dans ce cas exécutées en premier lieu pour déterminer les sous-ensembles préférentiels. Du fait du nombre relativement restreint de sous-ensembles préférentiels, l'étape (e) peut mettre en oeuvre un algorithme relativement complexe. Ainsi, la contrainte de former un chemin valide dans une représentation séquentielle, par exemple une arborescence ou un diagramme, peut être appliquée aux mots de chaque sous-ensemble préférentiel, pour choisir finalement le sous-ensemble meilleur candidat.

Alternativement, un seul sous-ensemble préférentiel est déterminé à l'étape (d) : la fiabilité de la reconnaissance est alors exactement la même quelque soit l'ordre des mots prononcés.

La présente invention a également pour objet un produit programme d'ordinateur de reconnaissance de la parole à partir d'un lexique. Le produit programme d'ordinateur est adapté pour être stocké dans une mémoire d'une unité centrale et/ou stocké sur un support mémoire destiné à coopérer avec un lecteur de ladite unité centrale et/ou téléchargeable via un réseau de télécommunication. Le produit programme d'ordinateur selon l'invention comprend des instructions pour exécuter le procédé décrit plus haut.

La présente invention a également pour objet un dispositif de reconnaissance de la parole à partir d'un lexique pour mettre en oeuvre les étapes du procédé décrit plus haut. Le dispositif selon l'invention comprend des moyens de mémorisation d'un lexique comprenant des sous-ensembles de mots prédéterminés. Des moyens d'identification permettent d'attribuer, à chaque mot d'au moins un sous-ensemble, un score individuel en fonction de la valeur d'un critère de vraisemblance de ce mot avec au moins une portion de la phrase prononcée. Des moyens de calcul permettent d'affecter à chaque sous-ensemble d'une pluralité de sous-ensembles, un score composite correspondant à une somme de scores individuels des mots de ce sous-ensemble. Le dispositif selon l'invention comprend également des moyens de sélection d'au moins un sous-ensemble préférentiel de score composite le plus élevé.

D'autres particularités et avantages de la présente invention apparaîtront dans la description ci-après.
La figure 1 montre un exemple de dispositif de reconnaissance de la parole selon une réalisation de la présente invention.
La figure 2 est un organigramme d'un exemple de procédé de reconnaissance de la parole selon une réalisation la présente invention.
La figure 3a montre un exemple de base de sous-ensembles d'un lexique selon une réalisation de la présente invention.
La figure 3b montre un exemple de jeu d'indices selon une réalisation de la présente invention.
La figure 3c montre un exemple de tableau pour le calcul de scores composites de sous-ensembles selon une réalisation de la présente invention.
La figure 4 montre un autre exemple de tableau pour le calcul de scores composites de sous-ensembles selon une réalisation de la présente invention.
La figure 5 montre un exemple d'organigramme d'un procédé de reconnaissance de la parole selon une réalisation de la présente invention.
La figure 6 montre un exemple d'arborescence utilisable pour exécuter un procédé de reconnaissance de la parole selon une réalisation de la présente invention.
La figure 7 montre un exemple de diagramme de mots utilisable pour exécuter un procédé de reconnaissance de la parole selon une réalisation de la présente invention.

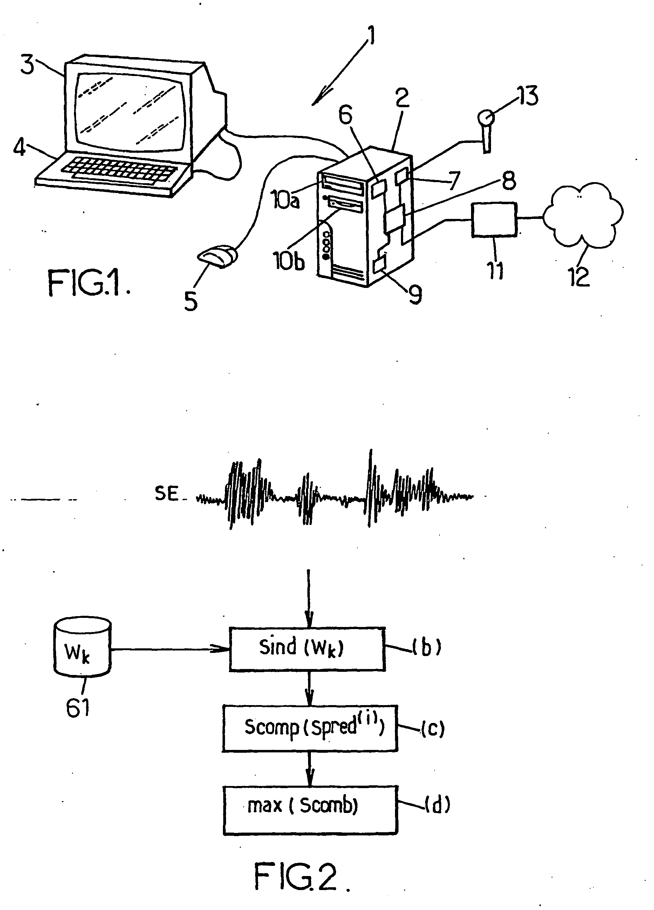

On se réfère tout d'abord à la figure 1, sur laquelle un dispositif de reconnaissance de la parole 1 comprend une unité centrale 2. Des moyens d'enregistrement d'un signal acoustique, par exemple un microphone 13, communiquent. avec des moyens de traitement des signaux acoustiques, par exemple une carte son 7. La carte son 7 permet d'obtenir un signal présentant un format adapté pour un traitement par un microprocesseur 8.

Un produit programme d'ordinateur de reconnaissance de la parole peut être stocké dans une mémoire, par exemple un disque dur 6. Cette mémoire permet également de stocker le lexique. Lors de l'exécution de ce programme d'ordinateur par le microprocesseur 8, le programme d'ordinateur ainsi que le signal représentatif du signal acoustique peuvent être momentanément stockés dans une mémoire vive 9 communiquant avec le microprocesseur 8.

Le produit programme d'ordinateur de reconnaissance de la parole peut également être stocké sur un support mémoire, par exemple une disquette ou un CD-ROM, destiné à coopérer avec un lecteur, par exemple un lecteur de disquettes 10a ou un lecteur de CD-ROM 10b.

Le produit programme d'ordinateur de reconnaissance de la parole peut également être téléchargé via un réseau de télécommunication, par exemple Internet, représenté sur la figure 1 par la référence 12. Un modem 11 peut être utilisé à cet effet.

Le dispositif de reconnaissance de la parole 1 peut également comprendre des périphériques. On peut citer à titre d'exemple un écran 3, un clavier 4 et une souris 5.

La figure 2 représente un organigramme d'un procédé de reconnaissance de la parole selon une réalisation la présente invention. Ce procédé peut par exemple être mis en oeuvre par le dispositif de reconnaissance de la parole représenté figure 1.

Un lexique 61 est prévu, le lexique comprenant des sous-ensembles Sp_{red}⁽ⁱ⁾ de mots Wₖ.

Dans ce mode de réalisation, le lexique est balayé pour attribuer (étape (b)) à chaque mot du lexique un score individuel S_{ind}(Wₖ). Ce score individuel est fonction de la valeur d'un critère de vraisemblance acoustique de ce mot Wₖ avec une portion d'une phrase prononcée SE. Le critère de vraisemblance acoustique peut être par exemple un score acoustique. Par exemple, lorsque le score acoustique d'un mot du lexique dépasse un certain seuil, on considère que ce mot est reconnu dans la phrase prononcée et le score individuel attribué à ce mot est égal à 1. A contrario, lorsque le score acoustique d'un mot donné est inférieur au seuil, on considère que ce mot n'a pas été reconnu dans la phrase prononcée SE et le score individuel attribué à ce mot est égal à 0. Les scores individuels prennent ainsi des valeurs binaires.

D'autres algorithmes peuvent être utilisés pour déterminer les scores individuels à partir de critères de vraisemblance acoustique.

Dans ce mode de réalisation, un score composite S_{com}(S_{pred}⁽ⁱ⁾) est affecté à chaque sous-ensemble du lexique (étape (c)). Le score composite S_{camp}(S_{pred}⁽ⁱ⁾) d'un sous-ensemble S_{Pred}⁽ⁱ⁾ est calculé en effectuant une sommation des scores individuels S_{ind} des mots de ce sous-ensemble. L'addition étant commutative, le score composite d'un sous-ensemble ne dépend pas de l'ordre dans lequel les mots ont été effectivement prononcés. Cette somme peut être pondérée, ou pas. Cette somme peut également n'être qu'un terme ou un facteur dans le calcul du score composite.

Enfin, un sous-ensemble préférentiel est déterminé (étape (d)). Dans cet exemple, on choisit le sous-ensemble ayant le score composite le plus élevé.

### Calcul des scores composites

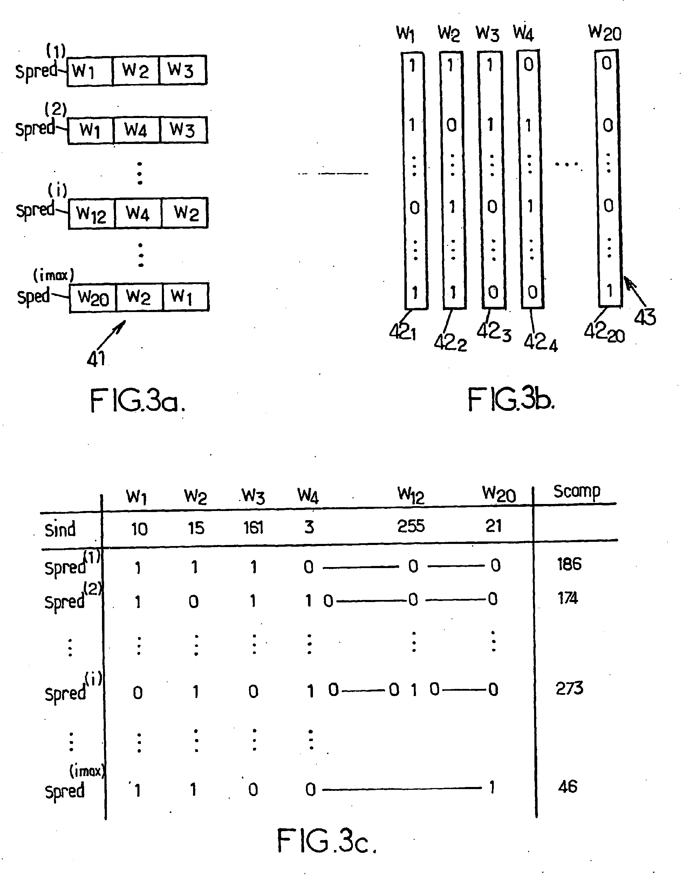

Les figures 3a, 3b et 3c montrent un exemple de procédé permettant de calculer les scores composites de sous-ensembles déjà construits.

La figure 3a montre un exemple de base référencée 41 de sous-ensembles. Dans cet exemple, le nombre de mots de chaque sous-ensemble est égal à trois. Le lexique comprend un nombre de sous-ensembles I_{MAX}. Chaque sous-ensemble S_{pred}⁽ⁱ⁾ du lexique comprend trois mots du lexique Wₖ, sans aucun ordonnancement. Par exemple un second sous-ensemble S_{pred}⁽²⁾ comprend les mots W1, W4 et W3.

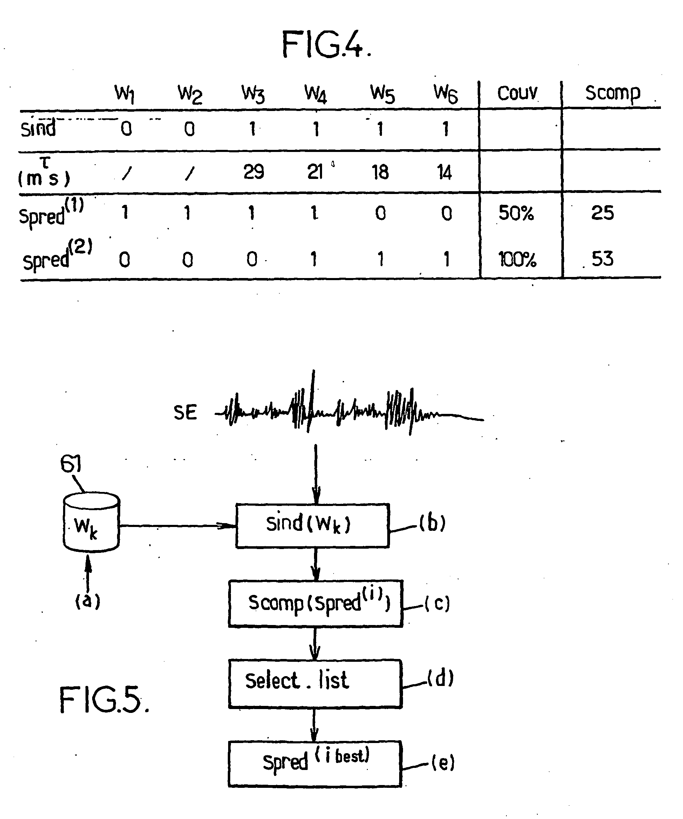

A partir de la base 41 peut être construit un jeu 43 d'indices (42₁, 42₂, 42₃, 42₄,...,42₂₀), comme représenté sur la figure 4b. Chaque indice comprend des coefficients représentés en colonne, et est associé à un mot (W1, W2, W3, W4,...,W20) du lexique. Chaque ligne est associée à un sous-ensemble Sₚᵣₑ⁽ⁱ⁾. Pour un mot Wₖ donné, et pour un sous-ensemble donné, le coefficient correspondant prend une première valeur, par exemple 1, si le sous-ensemble comprend le mot Wₖ, et une seconde valeur, par exemple 0, dans le cas contraire. Par exemple, en supposant que le mot W3 fasse partie d'un premier sous-ensemble S_{pred}⁽¹⁾ et du second sous-ensemble Spred⁽²⁾ seulement, les coefficients de l'indice correspondant 42₃ sont tous nuls à l'exception du premier et du second coefficient respectivement situés à la première ligne et à la seconde ligne.

Le jeu 43 d'indices permet de dresser un tableau, comme représenté à la figure 4c. A chaque colonne du tableau est associé un mot (W1, W2, W3, W4,...,W20) du lexique. Chaque sous-ensemble Sₚᵣₑ⁽ⁱ⁾ du lexique est associé à une ligne du tableau. Le tableau, comprend en outre une ligne supplémentaire indiquant la valeur d'un score individuel S_{ind} pour chaque colonne, c'est-à-dire pour chaque mot. Dans cet exemple, les scores individuels sont choisis proportionnels aux scores acoustiques correspondants. Les scores acoustiques sont obtenus à partir d'une phrase prononcée.

En sommant sur les mots du lexique (W1,..., W20) les valeurs des scores individuels pondérées par les coefficients correspondants d'une ligne donnée, on obtient le score composite du sous-ensemble correspondant à cette ligne. Le calcul des scores des sous-ensembles est ainsi rapide et varie de façon linéaire avec la taille du lexique ou avec le nombre de mots des sous-ensembles.

Bien entendu, ce procédé de calcul n'est donné qu'à titre illustratif et ne limite aucunement la portée de la présente invention.

**Autre exemple de calcul de scores composites**

La figure 4 montre un autre exemple de tableau pour le calcul de scores composites de sous-ensembles selon une réalisation de la présente invention. Cet exemple se rapporte au domaine des orientations d'appels pour un fournisseur d'accès Internet.

Dans cet exemple, le lexique comprend six mots :
- « abonnement » (W1),
- « facture « (W2),
- « trop chère » (W3),
- « Internet » (W4),
- « marche pas » (W5), et
- « réseau » (W6).

Seulement deux sous-ensembles sont définis : un premier sous-ensemble qui peut par exemple comprendre les mots « abonnement », «facture », « Internet » et « trop chère », et un second sous-ensemble qui peut par exemple comprendre les mots « marche pas », « Internet », et « réseau ». Si, lors d'un appel téléphonique d'un client, le procédé suivant la présente invention permet de déterminer comme sous-ensemble préférentiel le premier sous-ensemble (respectivement le second sous-ensemble), le client est automatiquement orienté vers un département comptabilité (respectivement un département technique).

A chaque colonne du tableau est associé un mot (W1, W2, W3, W4, W5, W6) du lexique. Chaque sous-ensemble (S_{pred}⁽¹⁾, S_{pred}⁽²⁾) du lexique est associé à une ligne du tableau.

Le tableau comprend en outre deux lignes supplémentaires.

Une première ligne supplémentaire indique la valeur d'un score individuel S_{ind} pour chaque colonne, c'est-à-dire pour chaque mot. Dans cet exemple, les scores individuels prennent des valeurs binaires.

Une seconde ligne supplémentaire indique la valeur de la durée de chaque mot dans la phrase prononcée. Cette durée peut être mesurée lors de l'étape (b) d'attribution d'un score individuel à chaque mot. Par exemple, si pour un mot donné, la valeur d'un critère de vraisemblance acoustique de ce mot avec une portion de la phrase prononcée atteint un certain seuil, le score individuel prend une valeur égale à 1 et la durée de cette portion de la phrase prononcée est mesurée.

Pour chaque sous-ensemble (S_{pred}⁽¹⁾, S_{pred}⁽²⁾), le calcul des scores composites fait intervenir une étape de sommation des scores individuels des mots de ce sous-ensemble. Dans cet exemple, cette somme est pondérée par la durée des mots correspondants dans la phrase prononcée.

En effet, lorsque plusieurs mots d'un même sous-ensemble sont reconnus à partir sensiblement d'une même portion de la phrase prononcée, la somme des scores individuels risque d'être relativement élevée. Lors de l'étape (d), on risque de choisir un tel sous-ensemble plutôt qu'un sous-ensemble effectivement pertinent.

Par exemple, un lexique comprend entres autres un premier sous-ensemble comprenant les mots «chat », « champ » et « noir », ainsi qu'un second sous-ensemble comprenant les mots « chat », « pré » et « noir ». Lorsqu'un utilisateur prononce la phrase « le chat noir », et en supposant les scores individuels binaires, le score composite du second sous-ensemble sera probablement de 2 et le score composite du premier sous-ensemble sera probablement de 3. En effet, les mots « chat » et « champ » peuvent être reconnus à partir sensiblement d'une même portion de la phrase prononcée. On risque ainsi d'éliminer à tort le second sous-ensemble.

La simple somme des durées représente potentiellement une surestimation de la couverture temporelle réelle. Néanmoins, cette approximation est tolérable lorsqu'elle intervient dans une première passe de sélection d'une liste réduite de candidats, et qu'une seconde passe plus précise prend en compte les recouvrements seulement pour les sous-ensembles préférentiels sélectionnés.

De plus, lorsque la somme des durées des mots reconnus d'un sous-ensemble est inférieure à une certaine fraction de la durée de la phrase prononcée, par exemple 10%, il est possible de considérer que ce sous-ensemble n'est pas significatif.

Pour revenir à l'exemple du tableau de la figure 4, supposons qu'un utilisateur prononce la phrase : « Bonjour, j'ai encore un problème, le réseau Internet ne marche pas, c'est vraiment trop cher pour ce que c'est ». L'étape (b) de reconnaissance libre des mots du lexique peut conduire à reconnaître les mots « réseau », « Internet », « marche pas » et « trop chère ». Le score individuel de ces mots (W3, W4, W5, W6) est donc égal à 1, tandis que le score individuel des autres mots du lexique (W1, W2) est nul.

Lors de l'étape. (b), sont également mesurées les durées ┬ des mots reconnus.

Pour chaque sous-ensemble (S_{pred}⁽¹⁾, S_{pred}⁽²⁾), on somme sur les mots du lexique les valeurs des scores individuels pondérées par les durées correspondantes et par les coefficients correspondants de la ligne correspondante. Là aussi, le calcul est relativement rapide.

Cet algorithme conduit à une valeur de 50 pour le premier sous-ensemble S_{pred}⁽¹⁾ et à une valeur de 53 pour le second sous-ensemble S_{pred}⁽²⁾. Ces valeurs sont relativement proches et ne permettent pas de choisir clairement le second sous-ensemble.

Dans ce mode de réalisation, le procédé de calcul des scores composites comprend une étape supplémentaire de pondération de chaque score composite par une couverture Couv en nombre de mots relativement au nombre de mots du sous-ensemble correspondant. Ainsi, la couverture en nombre de mots du premier sous-ensemble S_{pred}⁽¹⁾ est de 50% seulement.

Le tableau peut donc comprendre une colonne supplémentaire indiquant la valeur de la couverture en nombre de mots Couv pour chaque sous-ensemble. Le score composite de chaque sous-ensemble est donc pondéré par la valeur de cette couverture en nombre de mots. Ainsi, le score composite du premier sous-ensemble S_{pred}⁽¹⁾ est de 25 seulement, tandis que le score composite du second sous-ensemble S_{pred}⁽²⁾ est de 53. Le second sous-ensemble S_{pred}⁽²⁾ peut ainsi être choisi sans ambiguïté comme sous-ensemble préférentiel.

De plus, les sous-ensembles ne comprennent pas forcément tous un même nombre de mots. La pondération par la couverture en nombre de mots est relative au nombre de mots du sous ensemble, ce que permet une comparaison des scores composites plus juste.

D'autres pondérations par des facteurs dépendants des nombres de mots des sous-ensembles sont également possibles.

### Sélection d'une liste réduite

La figure 5 montre un exemple d'organigramme d'un procédé de reconnaissance de la parole selon une réalisation de la présente invention. En particulier, un produit programme d'ordinateur de reconnaissance de la parole selon la présente invention peut comporter des instructions pour effectuer les différentes étapes de l'organigramme représenté.

Le procédé représenté comprend les étapes (a), (b) et (c), déjà décrites. Le procédé de reconnaissance de la parole de la présente invention peut prévoir que, suite à l'exécution de l'étape de détermination (d), un seul sous-ensemble préférentiel est déterminé, comme dans les exemples des figures 2 et 4, ou bien qu'une liste réduite de sous-ensembles préférentiels comprenant une pluralité de sous-ensembles préférentiels est sélectionnée.

Dans ce dernier cas, une étape (e) de détermination d'un seul sous-ensemble meilleur candidat S_{pred}^{(ibest)} à partir de la liste réduite peut être appliquée. En particulier, cette étape (e) s'effectuant sur un nombre de sous-ensembles relativement faible, des algorithmes relativement gourmands en temps de calcul peuvent être utilisés.

Le procédé de la présente invention permet en outre de conserver des hypothèses qui auraient risqué d'être éliminées avec un procédé impliquant seulement sur un modèle de langage ordonné. Par exemple, lorsqu'un utilisateur prononce la phrase « noir est le chat », les étapes (a), (b), (c) et (d) permettent de retenir un sous-ensemble comprenant les mots « chat » et « noir ». L'utilisation d'algorithmes plus complexes permet ensuite d'éliminer des sous-ensembles peu pertinents.

Par exemple, le recouvrement des mots d'un sous-ensemble de la liste réduite peut être estimée façon exacte. Pour chaque mot de ce sous-ensemble, on a mesuré un instant de début de la portion de la phrase prononcée correspondant et un instant de fin de cette portion. A partir de ces mesures, on peut déterminer les couvertures temporelles des mots du sous-ensemble. On peut par la suite estimer le recouvrement entre les mots du sous-ensemble. Si le recouvrement entre deux mots dépasse un certain seuil, le sous-ensemble peut être rejeté.

Reprenons l'exemple du premier sous-ensemble comprenant les mots «chat », « champ » et « noir », et du second sous-ensemble comprenant les mots « chat », « pré » et « noir ». On suppose toujours les scores individuels binaires. Lorsqu'un l'utilisateur prononce la phrase « le chat noir est dans le pré », les deux sous-ensembles ont un score composite égal à 3. La liste réduite comprend donc ces deux sous-ensembles. Le recouvrement des mots « chat » et « champ » dans la phrase prononcée peut être estimé. Ce recouvrement prenant ici une valeur relativement élevée, le premier sous-ensemble pourra être éliminé de la liste réduite.

De plus, la contrainte de former un chemin valide dans une représentation séquentielle peut être appliquée aux mots des sousensembles de la liste réduite.

La représentation séquentielle peut par exemple comprendre une représentation dite « NBest », qui consiste en ce que pour chaque sous-ensemble de la liste réduite, les mots de ce sous-ensemble soient ordonnés suivant différents chemins. Une probabilité cumulée peut être calculée pour chaque chemin. La probabilité cumulée peut utiliser un modèle dé Markov caché et tenir compte de la probabilité de passer d'un mot à l'autre. En choisissant la probabilité cumulée la plus élevée parmi toutes les probabilités cumulées de tous les sous-ensembles, on peut déterminer le sous-ensemble meilleur candidat.

Par exemple, la liste réduite peut comprendre deux sous-ensembles :
- « chat », « noir », « un », et
- « poire », « un », « champ »,

Plusieurs chemins sont possibles à partir de chaque sous-ensemble. Ainsi, pour le premier sous-ensemble :
- un-noir-chat,
- un-chat-noir,
- noir-un-chat,
- Etc...

Et, pour le second sous-ensemble :
- un-poire-champ,
- poire-champ-un,
- Etc.

La probabilité cumulée la plus élevée est par exemple ici celle associée au chemin un-chat-noir : le sous-ensemble meilleur candidat est donc le premier sous-ensemble.

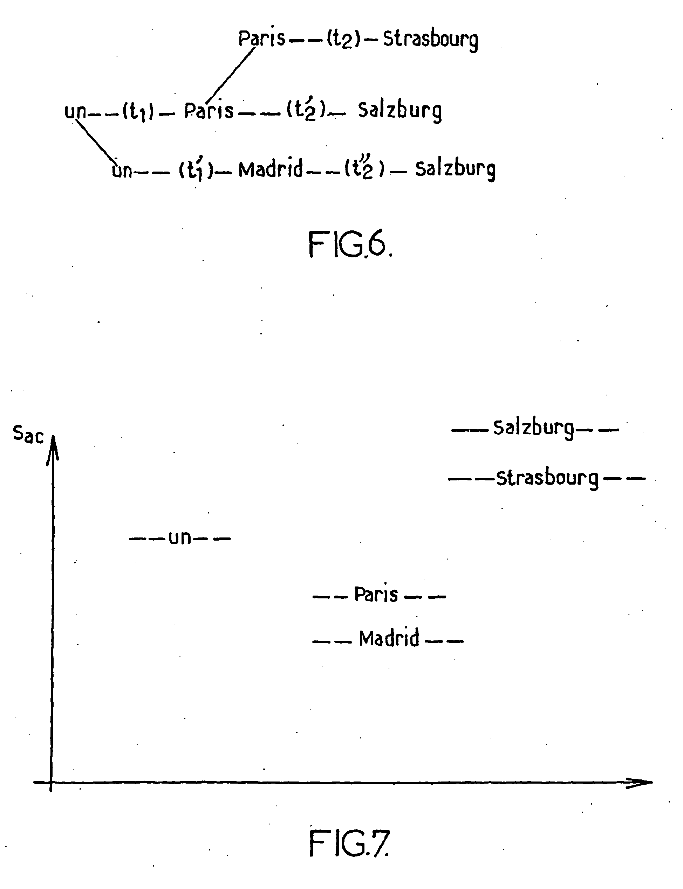

Les figures 6 et 7 illustrent deux autres exemples de représentations séquentielles, respectivement une arborescence et un diagramme de mots.

En se référant à la figure 6, une arborescence, également couramment appelée graphe de mots, est une représentation séquentielle avec des chemins définis par des séquences ordonnées de mots. Le graphe de mots, dont les arêtes sont des mots, et les états, des instants de transition entre mots, peut être construit.

Toutefois, l'élaboration d'un tel graphe de mot peut être fastidieuse, car les instants de transition coïncident rarement parfaitement. On peut améliorer cet état de fait en appliquant des approximations grossières sur la façon dont les instants de transition dépendent du passé.

Dans l'exemple représenté figure 6, la liste réduite comprend trois sous-ensembles de quatre mots :
- « un », « petit », « chat », « noir »,
- « un », « petit », « chat », « poire », et
- « un », « petit », « champ », « poire ».

La contrainte de former un chemin valide dans un graphe de mots est un moyen qui peut être appliquée aux mots des sous-ensembles de la liste réduite pour déterminer le meilleur candidat.

En se référant à la figure 7, un diagramme de mots, ou treillis, peut également être utilisé. Un diagramme de mots est une représentation séquentielle avec un temps en abscisse et un score acoustique en ordonnée.

Des hypothèses de mots sont émises en ignorant volontairement leur enchaînement. Un diagramme de mots peut être considéré comme une représentation d'un ensemble de quadruplets {t1, t2, mot du lexique, score acoustique}, où t1 et t2 sont des temps respectivement de début et de fin du mot prononcé par l'utilisateur. Le score acoustique de chaque mot est connu aussi du lexique.

Chaque mot du treillis peut être représenté par un segment d'une longueur proportionnelle à la couverture temporelle de ce mot prononcé.

En complément ou en variante, l'étape (e), peut comprendre au moins deux étapes : une étape utilisant un modèle de langage ordonné et une étape supplémentaire. Cette étape supplémentaire peut utiliser un procédé impliquant un modèle de langage commutatif, par exemple les étapes (c) et (d) et/ou un diagramme de mots sans indication de l'instant d'occurrence des mots. Du fait du petit nombre de sous-ensembles à comparer, ces étapes peuvent être exécutées avec davantage de précision.

### Variantes

Le lexique comprend des sous-ensembles de mots. Le lexique peut comprendre certains sous-ensembles ne comprenant qu'un seul mot. Ainsi un autre exemple de lexique peut être un annuaire des cabinets médicaux. Certains cabinets médicaux sont constitués d'un seul médecin, tandis que d'autres sont constitués d'une pluralité de médecins. Chaque sous-ensemble correspond à un cabinet médical donné. A l'intérieur de chaque sous-ensemble, l'ordre des mots, ici les noms des médecins, importe peu.

Les sous-ensembles peuvent être choisis de façon arbitraire et définitive. Des sous-ensembles peuvent être créés ou éliminés au cours de la vie du dispositif de reconnaissance de la parole. Cette gestion des sous-ensembles peut être le fait d'un apprentissage. De manière générale, la présente invention n'est pas limitée par le procédé de construction des sous-ensembles. Les sous-ensembles sont construits préalablement à l'exécution des étapes (c) et (d).

Lors de l'étape (b), un score individuel peut n'être attribué qu'à certains mots du lexique. Par exemple, si un mot du lexique est reconnu avec certitude, on peut ne balayer que les mots des sous-ensembles comprenant le mot reconnu, permettant par-là d'éviter des reconnaissances de mots inutiles et donc de gagner en temps d'exécution. De plus, du fait du nombre relativement réduit de sous-ensembles, les risques d'erreur sont relativement faibles.

Lors de l'étape (c), la pluralité de sous-ensembles peut ne couvrir qu'une partie des sous-ensembles du lexique, par exemple les sous-ensembles dont les mots se sont vus attribuer un score individuel.

Les scores composites peuvent eux même prendre des valeurs binaires. Par exemple, si la somme, éventuellement pondérée et éventuellement globalement multipliée par une couverture en nombre de mots, des scores individuels atteint un certain seuil, le score composite est choisi égal à 1. Le sous-ensemble correspondant est ainsi un sous-ensemble préférentiel.

## Revendications

1. Procédé de reconnaissance de parole, comportant, pour une phrase prononcée (SE), les étapes suivantes:
a) prévoir un lexique de mots (61) comportant des sous-ensembles (S_{pred}⁽ⁱ⁾) de mots prédéterminés,
b) attribuer, à chaque mot (Wₖ) d'au moins un sous-ensemble, un score individuel (S_{ind}(Wₖ)) en fonction de la valeur d'un critère de vraisemblance acoustique de ce mot avec une portion de la phrase prononcée,
c) pour une pluralité de sous-ensembles, affecter à chaque sous-ensemble de la pluralité de sous-ensembles un score composite (S_{comp}(S_{pred} ⁽ⁱ⁾)) correspondant à une somme des scores individuels des mots de ce sous-ensemble,
d) déterminer au moins un sous-ensemble préférentiel, de score composite le plus élevé.

2. Procédé selon la revendication 1, dans lequel
lors de l'étape (b), un score individuel (S_{ind}(Wₖ)) est attribué à chaque mot (Wₖ) du lexique (61).

3. Procédé selon l'une des revendications précédentes, dans lequel
les scores individuels (S_{ind}(Wₖ)) prennent des valeurs binaires.

4. Procédé selon l'une des revendications 1 ou 2, dans lequel
le score individuel (Si_{nd}(Wₖ)) attribué à un mot (Wₖ) comprend un score acoustique.

5. Procédé selon l'une des revendications précédentes, **caractérisé en ce que** pour chaque score composite (S_{comp}(S_{pred}⁽ⁱ⁾)), la somme de scores individuels (S_{ind}(Wₖ)) est pondérée par la durée des mots (Wₖ) correspondants dans la phrase prononcée (SE).

6. Procédé selon l'une des revendications précédentes, **caractérisé en ce que**
l'étape (d) comprend une étape de pondération de chaque score composite (S_{comp}(Sₚᵣₑ⁽ⁱ⁾)) par une couverture en nombre de mots (Couv) relativement au nombre de mots du sous-ensemble correspondant (S_{pred}⁽ⁱ⁾)).

7. Procédé selon l'une des revendications précédentes, comprenant
à l'étape (d), la sélection d'une liste réduite comprenant une pluralité de sous-ensembles préférentiels, et dans lequel
on applique une étape (e) de détermination d'un seul sous-ensemble meilleur candidat (S_{pred}^{(ibest)}).

8. Procédé selon la revendication 7, comprenant
pour chaque sous-ensemble préférentiel de la liste réduite, lors de l'étape (e), estimer le recouvrement des mots de ce sous-ensemble préférentiel dans la phrase prononcée (SE).

9. Procédé selon la revendication 7, comprenant
pour chaque sous-ensemble préférentiel de la liste réduite, lors de l'étape (e), appliquer aux mots de ce sous-ensemble préférentiel une contrainte de former un chemin valide dans une représentation séquentielle.

10. Procédé selon la revendication 9, dans lequel
la représentation séquentielle comprend un diagramme des mots des sous-ensembles préférentiels, avec un temps en abscisse et un score acoustique en ordonnée.

11. Procédé selon la revendication 9, dans lequel
la représentation séquentielle comprend une arborescence avec des chemins définis par des séquences ordonnées des sous-ensembles préférentiels.

12. Produit programme d'ordinateur de reconnaissance de la parole à partir d'un lexique, le programme d'ordinateur étant destiné à être stocké dans une mémoire d'une unité centrale (2), et/ou stocké sur un support mémoire destiné à coopérer avec un lecteur (10a, 10b) de ladite unité centrale et/ou téléchargé via un réseau de télécommunication (12),
**caractérisé en ce qu'**il comprend, pour une phrase prononcée, des instructions pour:
- consulter un lexique comprenant des sous-ensembles de mots prédéterminés,
- attribuer à chaque mot d'au moins un sous-ensemble un score individuel en fonction de la valeur d'un critère de vraisemblance de ce mot avec une portion de la phrase prononcée,
- pour une pluralité de sous-ensembles, affecter à chaque sous-ensemble de la pluralité un score composite correspondant à une somme des scores individuels des mots de ce sous-ensemble,
- déterminer au moins un sous-ensemble préférentiel, de score composite le plus élevé.

13. Dispositif de reconnaissance de la parole, comprenant, pour une phrase prononcée,
- des moyens de mémorisation (6) d'un lexique comprenant des sous-ensembles de mots prédéterminés,
- des moyens d'identification pour attribuer, à chaque mot d'au moins un sous-ensemble, un score individuel en fonction de la valeur d'un critère de vraisemblance de ce mot avec au moins une portion de la phrase prononcée,
- des moyens de calcul (8) pour affecter à chaque sous-ensemble d'une pluralité de sous-ensembles, un score composite correspondant à une somme de scores individuels des mots de ce sous-ensemble, et
- des moyens de sélection d'au moins un sous-ensemble préférentiel de score composite le plus élevé.

## Claims

1. Speech-recognition method comprising, for a pronounced sentence (SE), the following steps:
a) providing a glossary of words (61) comprising predetermined word subsets (S_{pred}⁽ⁱ⁾),
b) allocating, to each word (Wₖ) of at least one subset, an individual score (S_{ind}(Wₖ)) according to the value of a criterion of acoustic similarity of this word with a portion of the pronounced sentence,
c) for a plurality of subsets, assigning to each subset of the plurality of subsets a composite score (S_{comp}(S_{pred}⁽ⁱ⁾)) corresponding to a sum of the individual scores of the words of this subset,
d) determining at least one preferred subset with the highest composite score.

2. Method according to Claim 1, wherein
during step (b), an individual score (S_{ind}(Wₖ)) is allocated to each word (Wₖ) of the glossary (61).

3. Method according to one of the preceding claims, wherein
the individual scores (S_{ind} (Wₖ)) take binary values.

4. Method according to one of Claims 1 or 2, wherein
the individual score (S_{ind}(Wₖ)) allocated to a word (Wₖ) comprises an acoustic score.

5. Method according to one of the preceding claims,
**characterized in that**, for each composite score (S_{comp}(S_{pred}⁽ⁱ⁾)), the sum of individual scores (S_{ind}(Wₖ)) is weighted by the duration of the corresponding words (Wₖ) in the pronounced sentence (SE).

6. Method according to one of the preceding claims, **characterized in that**
the step (d) comprises a step of weighting of each composite score (S_{comp}(S_{pred}⁽ⁱ⁾)) by a coverage in number of words (Couv) relative to the number of words of the corresponding subset (S_{pred}⁽ⁱ⁾).

7. Method according to one of the preceding claims, comprising,
in step (d), the selection of a reduced list comprising a plurality of preferred subsets, and wherein a step (e) of determination of a single best candidate subset (S_{pred}^{(ibest)}) is applied.

8. Method according to Claim 7, comprising,
for each preferred subset of the reduced list, during step (e), estimating the overlap of the words of this preferred subset in the pronounced sentence (SE).

9. Method according to Claim 7, comprising,
for each preferred subset of the reduced list, during step (e), applying to the words of this preferred subset a constraint of forming a valid path in a sequential representation.

10. Method according to Claim 9, wherein
the sequential representation comprises a diagram of the words of the preferred subsets, with a time as the abscissa and an acoustic score as the ordinate.

11. Method according to Claim 9, wherein
the sequential representation comprises a tree structure with paths defined by ordered sequences of the preferred subsets.

12. Computer program product of speech recognition based on a glossary, the computer program being designed to be stored in a memory of a central processor unit (2), and/or stored on a memory medium designed to interact with a drive (10a, 10b) of said central processor unit and/or downloaded via a telecommunication network (12),
**characterized in that** it comprises, for a pronounced sentence, instructions suitable for:
- consulting a glossary comprising predetermined word subsets,
- allocating to each word of at least one subset an individual score according to the value of a criterion of similarity of this word with a portion of the pronounced sentence,
- for a plurality of subsets, allocating to each subset of the plurality a composite score corresponding to a sum of the individual scores of the words of this subset,
- determining at least one preferred subset with the highest composite score.

13. Speech-recognition device, comprising, for a pronounced sentence,
- means for storing (6) a glossary comprising predetermined word subsets,
- identification means for allocating, to each word of at least one subset, an individual score according to the value of a criterion of similarity of this word with at least a portion of the pronounced sentence,
- computing means (8) for assigning, to each subset of a plurality of subsets, a composite score corresponding to a sum of individual scores of the words of this subset, and
- means for selecting at least one preferred subset with the highest composite score.

## Patentansprüche

1. Spracherkennungsverfahren, das für einen gesprochenen Satz (SE) die folgenden Schritte aufweist:
a) ein Wörterlexikon (61) vorzusehen, das vorbestimmte Teileinheiten (S_{pred}⁽ⁱ⁾) von Wörtern enthält,
b) jedem Wort (Wₖ) mindestens einer Teileinheit einen individuellen Score (S_{ind}(Wₖ)) in Abhängigkeit von dem Wert eines akustischen Likelihood-Kriteriums dieses Worts mit einem Teil des gesprochenen Satzes zuzuweisen,
c) für mehrere Teileinheiten, jeder Teileinheit der mehreren Teileinheiten einen zusammengesetzten Score (S_{comp}(Sp_{red}⁽ⁱ⁾)) zuzuteilen, der einer Summe der individuellen Scores der Wörter dieser Teileinheit entspricht,
d) mindestens eine bevorzugte Teileinheit mit dem höchsten zusammengesetzten Score zu bestimmen.

2. Verfahren nach Anspruch 1, bei dem im Schritt (b) jedem Wort (Wₖ) des Lexikons (61) ein individueller Score (S_{ind}(Wₖ)) zugewiesen wird.

3. Verfahren nach einem der vorhergehenden Ansprüche, bei dem die individuellen Scores (S_{ind}(Wₖ)) Binärwerte annehmen.

4. Verfahren nach einem der Ansprüche 1 oder 2, bei dem der einem Wort (Wₖ) zugeteilte individuelle Score (S_{ind}(Wₖ)) einen akustischen Score aufweist.

5. Verfahren nach einem der vorhergehenden Ansprüche, **dadurch gekennzeichnet, dass** für jeden zusammengesetzten Score (S_{comp}(S_{pred}⁽ⁱ⁾)) die Summe der individuellen Scores (S_{ind}(Wₖ)) durch die Dauer der entsprechenden Wörter (Wₖ) in dem gesprochenen Satz (SE) gewichtet wird.

6. Verfahren nach einem der vorhergehenden Ansprüche, **dadurch gekennzeichnet, dass** der Schritt (d) einen Schritt der Gewichtung jedes zusammengesetzten Scores (S_{comp}(S_{pred}⁽ⁱ⁾)) durch eine Wortzahl-Abdeckung (Couv) bezüglich der Anzahl von Wörtern der entsprechenden Teileinheit (S_{pred}⁽ⁱ⁾) aufweist.

7. Verfahren nach einem der vorhergehenden Ansprüche, das im Schritt (d) die Auswahl einer reduzierten Liste aufweist, die mehrere bevorzugte Teileinheiten enthält, und bei dem ein Schritt (e) der Bestimmung einer einzigen Teileinheit bester Kandidat (S_{pred}^{(ibest)}) angewendet wird.

8. Verfahren nach Anspruch 7, das für jede bevorzugte Teileinheit der reduzierten Liste im Schritt (e) die Schätzung der Überdeckung der Wörter dieser bevorzugten Teileinheit in dem gesprochenen Satz (SE) enthält.

9. Verfahren nach Anspruch 7, das für jede bevorzugte Teileinheit der reduzierten Liste im Schritt (e) die Anwendung einer Bedingung des Formens eines gültigen Pfads in einer sequentiellen Darstellung an die Wörter dieser bevorzugten Teileinheit aufweist.

10. Verfahren nach Anspruch 9, bei dem die sequentielle Darstellung ein Diagramm der Wörter der bevorzugten Teileinheiten mit einer Zeit in der Abszisse und einem akustischen Score in der Ordinate aufweist.

11. Verfahren nach Anspruch 9, bei dem die sequentielle Darstellung einen Suchbaum mit Pfaden aufweist, die durch geordnete Sequenzen der bevorzugten Teileinheiten definiert sind.

12. Computerprogrammprodukt zur Spracherkennung ausgehend von einem Lexikon, wobei das Computerprogramm dazu bestimmt ist, in einem Speicher einer Zentraleinheit (2) gespeichert zu werden, und/oder in einem Speicherträger gespeichert zu werden, der dazu bestimmt ist, mit einem Lesegerät (10a, 10b) der Zentraleinheit zusammenzuwirken, und/oder über ein Telekommunikationsnetz (12) heruntergeladen zu werden,
**dadurch gekennzeichnet, dass** es für einen gesprochenen Satz geeignete Anweisungen enthält, um
- ein Lexikon abzufragen, das vorbestimmte Teileinheiten von Wörtern enthält,
- jedem Wort mindestens einer Teileinheit einen individuellen Score in Abhängigkeit vom Wert eines Likelikood-Kriteriums dieses Worts mit einem Teil des gesprochenen Satzes zuzuweisen,
- für mehrere Teileinheiten, jeder Teileinheit der mehreren Teileinheiten einen zusammengesetzten Score zuzuteilen, der einer Summe der individuellen Scores der Wörter dieser Teileinheit entspricht,
- mindestens eine bevorzugte Teileinheit mit dem höchsten zusammengesetzten Score zu bestimmen.

13. Spracherkennungsvorrichtung, die für einen gesprochenen Satz aufweist
- Speichermittel (6) eines Lexikons, das vorbestimmte Teileinheiten von Wörtern enthält,
- Identifikationsmittel, um jedem Wort mindestens einer Teileinheit einen individuellen Score in Abhängigkeit von dem Wert eines Likelihood-Kriteriums dieses Worts mit mindestens einem Teil des gesprochenen Satzes zuzuweisen,
- Rechenmittel (8), um jeder Teileinheit von mehreren Teileinheiten einen zusammengesetzten Score zuzuteilen, der einer Summe von individuellen Scores der Wörter dieser Teileinheit entspricht, und
- Mittel zur Auswahl mindestens einer bevorzugten Teileinheit mit dem höchsten zusammengesetzten Score.
